(19) 

**Europäisches Patentamt**
**European Patent Office**
**Office européen des brevets**

(11) **EP 4 266 524 A1**

(12) **EUROPEAN PATENT APPLICATION**

(43) Date of publication:
**25.10.2023 Bulletin 2023/43**

(21) Application number: **23168672.6**

(22) Date of filing: **19.04.2023**

(51) International Patent Classification (IPC):
**H02J 1/10** *(2006.01)*       **H02J 13/00** *(2006.01)*

(52) Cooperative Patent Classification (CPC):
**H02J 1/106; H02J 1/102; H02J 13/00034**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.04.2022 US 202263333140 P**

(71) Applicant: **DC Systems B.V.**
**1432 AH Aalsmeer (NL)**

(72) Inventors:
• **STOKMAN, Henricus David**
  **1431 XP AALSMEER (NL)**
• **KOLIOS, Panagiotis**
  **2408 TK ALPHEN AAN DEN RIJN (NL)**

(74) Representative: **Plasseraud IP**
**66, rue de la Chaussée d'Antin**
**75440 Paris Cedex 09 (FR)**

(54) **DROOP CONTROL IN A DC OPERATED SYSTEM**

(57)    The invention relates to a method for droop control in a DC system comprising a DC source, a DC bus and at least two DC application devices. Each application device having a droop curve and the DC source providing a DC voltage over the DC bus to each application device. Each application device performs a first voltage measurement during a first load condition and performs a second voltage measurement during a second load condition. And each application device adjust its respective settings of the droop curve in accordance with the first and second voltage measurements.

**FIG. 6**

**Description**

The present invention relates to DC electrical grids and DC operated devices powered via a DC voltage bus of such a DC electrical grid. In particular, some embodiments of the invention relate to a method and/or an apparatus or system for droop control and, more particularly, for droop control of DC operated application devices.

BACKGROUND

DC electrical grids are gaining more prominence due to a number of advantages that a DC-operated electrical grid may have over an alternating current (AC)-operated electrical grid. One advantage is the efficiency associated with DC energy generation, especially with sustainable energy sources such as e.g. solar power or wind power. Other advantages include efficiency associated with conversion of the DC voltage to higher or lower voltages and storage of the DC energy as e.g. in capacitors and batteries, and hence consume less energy.

In electrical grids with multiple loads and/ or energy sources, whether renewable energy or not, supply and demand need be managed. For AC microgrids various methods have been developed, however such conventional AC methods are difficult and rather inefficient to apply, due to the low DC grid inertia. Where in order to facilitate operation when supply is scarce, enabling flexibility in demand and supply is crucial. And the more intermittent Renewable Energy Sources RES are introduced in a grid, the more relevant this becomes.

In AC electrical grids, the frequency of the AC signal may be used as control signal for signaling. With droop control, when the grid is operating at a maximum operating frequency, an energy source may reduce the power supplied, whereas when the grid is at a minimum operating frequency, the power supplied by the source is maximized. This is achieved with the help of power electronics However, with DC grids such control is impossible to the absence of any frequency.

SUMMARY OF INVENTION

It is an object of the invention to facilitate droop control in a DC operated system.

According to the invention, this object is achieved by providing a method for droop control in a DC system. The DC system including a DC source, a DC bus and at least two DC application devices. Each application device having a droop curve and the DC source providing a DC voltage over the DC bus to each application device. Each application device performs a first voltage measurement during a first load condition and performs a second voltage measurement during a second load condition. And each application device adjust its' respective settings of the droop curve in accordance with the first and second voltage measurements.

According to one aspect, there is provided a DC operated application device configured to facilitate droop control.

According to another aspect, there is provided a DC operated system including DC operated application devices that are configured to facilitate droop control.

Further objects, aspects, effects and details of particular embodiments of the invention are described in the following detailed description of a number of exemplary embodiments, with reference to the drawings.

BRIEF DESCRIPTION OF DRAWINGS

By way of example only, the embodiments of the present disclosure will be described with reference to the accompanying drawings, wherein:

FIG. 1 illustrates schematically an example of DC powered streetlighting;

FIG. 2 shows an electric diagram of the example of Fig.1;

FIG. 3 illustrates schematically an example of a protection circuit;

FIG. 4 illustrates an example of black start and calibration signals in time;

FIG. 5 illustrates another example of black start and calibration signals in time;

FIG. 6 illustrates an example of method for droop control in accordance with the invention; and

FIG. 7 illustrates another example of a method for droop control in accordance with the invention.

DETAILED DESCRIPTION

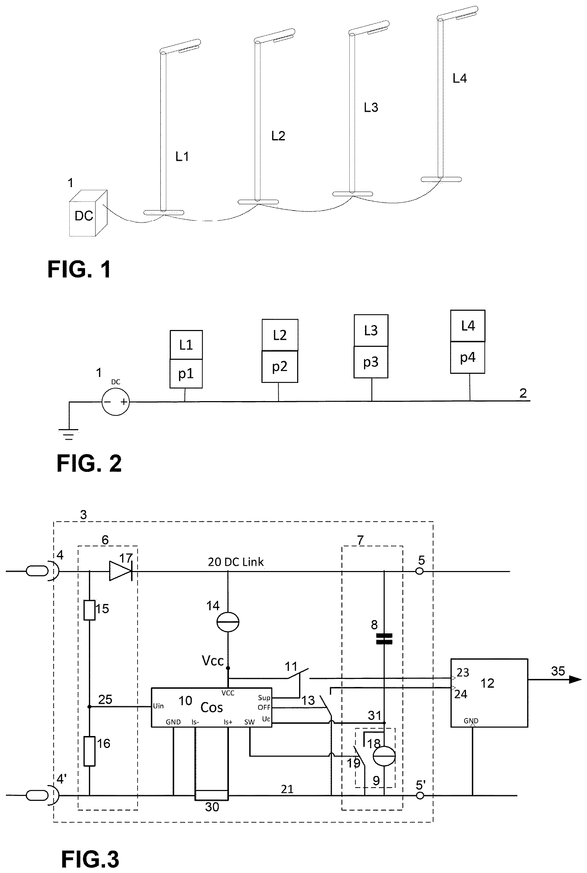

Fig. 1 shows an example of a lighting system wherein, in this example, streetlights are powered by a DC source 1. In such a system the power supply lines may extend over several hundreds of meters or kilometers. As a consequence, the signal level and quality of the supplied power may deteriorate over distance.

Fig. 2 shows an electrical diagram of the lighting system of Fig. 1, with DC source 1 connecting four lights represented as loads L1, L2, L3 and L4 over a DC power supply line 2. Each load L1-L4 is connected to the supply line 2 via a respective protection circuit p1-p4. The protection circuit is arranged to ensure safely connecting and disconnecting of a load.

PROTECTION CIRCUIT

Referring to Fig.3, an example of a protection circuit 3 is shown in more detail. The protection circuit 3 has input terminals 4,4' powered from the main DC power source 1. The protection circuit 3 further has terminals 5, 5' for providing power to a DC operated load i.e. application device. In operation, when a load is connected to the output terminals 5,5' the DC voltage present on a DC link 20 is supplied. A load i.e. operated device may have a local power supply unit PSU 12, including a PSU local controller, for powering on of the Vcc line 35 of the load. The Vcc line 35 provides the power for any active elements of the load, such as electronics, that execute any control programs, switches, and/ or other components of the load.

The protection circuit 3 has a first stage 6 which includes a voltage measurement circuit 15, 16 coupled between the input terminals 4,4'. In the example of Fig. 1, the voltage measurement circuit includes a voltage divider circuit having at least two impedances 15, 16 connected in series. The connection between the at least two impedances 15, 16 provides a voltage level 25, which is determined by the respective dimensions of the at least two impedances 15, 16. The first stage 6 further includes a current directional element, in this example a diode 17, to prevent current flowing back into the first stage 6. The protection circuit 3 further has a second stage 7 following the first stage 6, which includes a DC link capacitor 8 in series with a pre-charge control circuit 9. The second stage 7 is connected in parallel with the first stage 6 between the input terminals 4,4'.

The protection circuit 3 further includes a digital controller 10. The digital controller 10 is an active element that is powered by an auxiliary power source 14, at least temporarily until power is supplied by a local PSU of the application device. The auxiliary power source 14 may be common battery, it may be an active power source fed by the DC link that is connected to the first input terminal, such as a dependent current source that is fed from the DC link 20, or it may be any other suitable active power source for powering the digital controller 10. As an indication of power that may be provided e.g. in the order of 3mA.

Any DC operated load or DC application will include electronics that need to be powered in order to operate. Thereto such devices will have a local power supply unit PSU 12 to facilitate delivery of the required power. In order to control power that is to be delivered to the application electronics, the protective circuit 3 is further provided with a digital controller 10. The digital controller 10 is arranged for controlling activating and de-activating of the local PSU 12 for supplying power to electronics of the load. The digital controller 10 may control activating and de-activating of the local PSU 12 by operating a power switch 11 for connecting the auxiliary power source 14 to a power input 23 of the local PSU 12. In addition, or instead, the digital controller 10 may operate a ground switch 13 for connecting a ground line, such as ground line 21, to a soft-start input 24 of the local PSU 12. In the case of connecting to ground only, no connection between source 14 and local PSU 12 is required. The digital controller 10 may further be arranged for monitoring operating conditions of the load, such as an overload condition, by means of a shunt resistor 30 connected in series with the ground line 21.

PRECHARGING

When a load, or more generally any application device, is initially connected and to be powered by the main DC power source 1, the electronics 12 of the application device i.e. load, need to be powered before main power is delivered to the application device. And prior to this activation of the electronics, e.g. via the local power source controller, a DC link capacitor 8 needs to be charged. Such DC link capacitor is part of any application device and connected between a DC link 20 and ground line 21. In operation, the DC link capacitor 8 is intended to supply fast current requested by the device, when e.g. mosfets in the device switch fast. It further provides a hold-up time for the device in case the grid voltage should drop. During activation, it needs to be ensured that this DC link capacitor 8 is charged gradually over time, so no abrupt voltage or current spike occurs. This in order to prevent tripping of any upstream fast breaking circuit or protection devices. This is referred to as pre-charging of the application.

Referring still to Fig. 3, in this embodiment the pre-charge capacitor 8 of the protective circuit 1 also functions as DC link capacitor for the application device 12. In such case, the pre-charge capacitor 8 is connected in series with a pre-charge control circuit 9. This allows the protective circuit 3 to be implemented as an integral part of the application device. Alternatively, the application device may have a separate DC link capacitor, in which case a pre-charge capacitor 8 is not necessarily required. The pre-charge control circuit 9 includes a current source 18 in parallel with a bypass switch 19. Alternatively, the source 18 may also be a voltage source or a passive dissipative component, like e.g. a variable resistor, for facilitating pre-charging of the application device. The purpose of the pre-charge is to gradually raise the voltage level on the DC link side of the capacitor 8 up to the voltage level of the DC power source.

The bypass switch 19 is to be operated in dependence of a pre-charge condition, i.e. indicating that the pre-charging is completed. Thereto the digital controller 10 is further arranged for determining the pre-charge condition by measuring a voltage level 31 in the second stage 7. And the digital controller 10 is further arranged for operating the bypass switch 19 based on the pre-charge condition. When the pre-charging is completed, the bypass switch 19 is closed to connect the DC link capacitor 8 with the ground line 21. Basically, the pre-charge condition is determined by the voltage across the capacitor 8 matching the input voltage on the input terminals 2, 2' or when no current is flowing through pre-charging circuit 9.

In the embodiment of Fig. 3, the power source 18 functions like a drain, drawing current from one side of the DC link capacitor until that side equals the ground reference voltage i.e. zero. If that ground side is equal to ground or zero, the other side of the DC link capacitor consequently is equal to the voltage level of the DC link, meaning that pre-charging of the application is completed.

BLACKSTART & SAFETY WIRE

As will be apparent from the above, the starting up and activating of a DC grid or other DC system with DC operated devices requires different approaches from known AC systems. This also applies to the first step of energizing or activating a DC source that is to supply power to a DC grid, a DC bus and basically any DC system. Thereto, a DC system operating according to the above protocols will perform a procedure indicated as blackstart procedure. In addition, and in particular when the DC system includes multiple sources, the DC system may include a safety wire.

The safety wire is a line voltage connection that provides a voltage level of e.g. 48V to DC sources, indicating that the DC sources may supply power to the DC bus i.e. the supply line 2 of Fig. 2. When no power or voltage is supplied over the safety wire, each and any DC source is configured to stop supplying power to the DC bus.

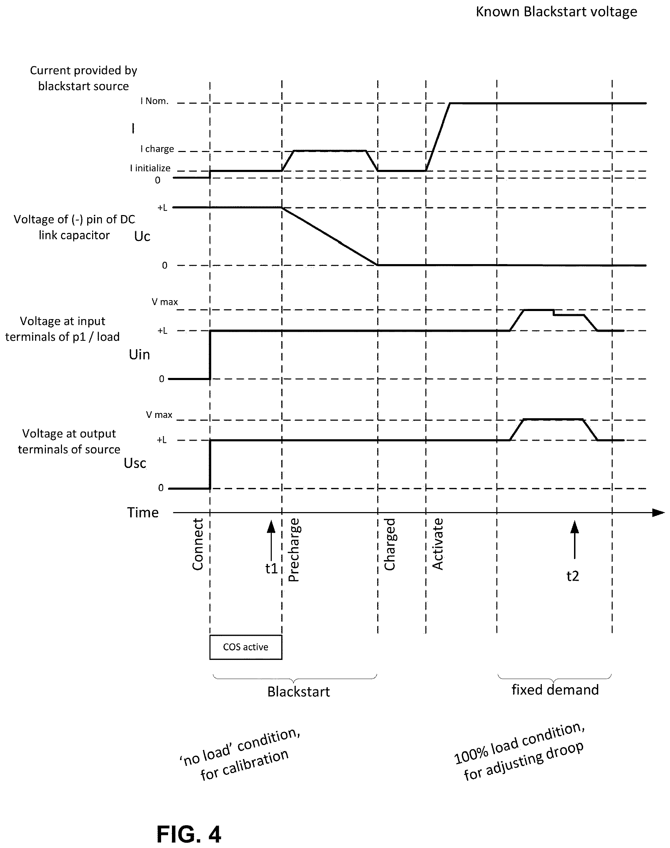

Referring to Fig.4, a graph displaying various signals present in the system of e.g. Fig. 1 in time is shown. At the top, the current as drawn by application devices, is displayed, with current levels indicated for a first initialization current Iinitialize, a charging current $I_{charge}$ , and nominal current $I_{nominal}$. There below, the voltage Uc at the negative pin of the DC link capacitor, as e.g. capacitor 8 in Fig.3, is displayed, with voltage levels for ground i.e. zero '0' and DC link voltage '+L', such as DC link 20 in Fig.3. There below, the voltage across the input terminals Uin of the application, such as e.g. loads p1-p4 in Fig.2, is displayed, with voltage levels for ground i.e. zero '0', DC link voltage '+L', such as DC link 20 in Fig.3, and a maximum voltage $V_{max}$. And at the bottom, the voltage across the output terminals of the source Usc, such as e.g. DC source 1 in Fig.2, is displayed, with voltage levels for ground i.e. zero '0', DC bus voltage '+L', and the maximum voltage $V_{max}$.

Referring to Fig.4, during the blackstart procedure a small amount of energy is supplied, e.g. charging the DC bus with a constant current, to boot the voltage of the DC bus to a minimum operational voltage. And if a safety wire is present, such as with multiple sources, this is booted up to its' regular operating voltage, such as e.g. 48V. During this pre-charge electronics of sources and applications are activated. When the DC bus has reached its' minimum operational value and when, if present, the safety wire is active, sources within the system may support the further charging of the DC bus. Once the DC bus is charged at its' nominal operating voltage, various loads and application devices may start demanding power. Accordingly, there is an inrush phase during which a minimal current Iinitialize of e.g. 3 mA or less is demanded by each of the various loads and which phase lasts until the voltage at the DC bus and cables is stabilized. Then the pre-charge phase follows during which the current $I_{charge}$ is limited to 10% - 30 % of the nominal current in order to prevent tripping of any solid-state short-circuit protection. During the pre-charge phase each application device charges its' respective DC link capacitor, indicated by the voltage Uc of the negative pin, that will bring the DC link in each application device to its' operational voltage matching the DC supply line voltage. When pre-charge is completed, and the system is charged, the application devices may start demanding power.

The black start procedure may be initiated and performed by a dedicated device, such as a stand-alone battery powered device, that contains enough energy to boot the DC bus and the safety wire.

CALIBRATION - with COMMUNICATION

In order to ensure that the various loads along an extended supply line, as in e.g. the lighting system of Fig. 1, will operate in a coordinated manner, it will be required that they respond according to the voltage level supplied as intended. Even though the voltage provided by DC source remains stable, the protection circuits of the respective loads may simultaneously sense a different voltage level on the supply line at the same time instant at their various locations; which may be due to losses in the supply line. Accordingly, a process of calibration is required that allows each load, via its' protection circuit, to detect whether the current voltage level is a maximum voltage level, a minimum voltage level or at a predetermined level in between those minimum and maximum values.

In an electrical system where communication means between the source and the various loads are available, the source may simply communicate the voltage level it is supplying and each protection circuit may measure its' local voltage level and associate that with the communicated level of voltage currently being supplied. In such a system with communication available between source and application devices, such as loads, each application device may perform a method for calibrating its' voltage measurements. Accordingly, the application device connected to the DC bus that is supplied by the DC source, will receive from the DC source a communication with a measurement value of the DC voltage presently provided by the DC source. Then the application device will perform a first measurement of local voltage, see t1 in Fig. 4, during the inrush phase of the blackstart procedure. The inrush phase during which a minimum current is provided, such as e.g. 3mA, may be considered as a 'no load' condition, as the electronics of various application devices will not yet be activated and hence power is not yet demanded. Following stabilization of the voltage on the supply line, pre-charging may commence.

Once the inrush and pre-charge are completed and the supply line is at its' nominal operational value, calibration may be performed which is initialized by the DC source rising to maximum voltage $V_{max}$. Then each application device may respond by starting to demand full power. This maximum or 'full load' condition will influence the voltage level available along the length of the supply line; and it may also show a local dip in the $V_{max}$, see Uin in Fig. 4. Each application device will then perform a second measurement of the local voltage under this full load condition, see t2 in Fig. 4, to determine what local voltage should be associated with the nominal voltage as communicated by the DC source. The increase of demand from the various loads may be achieved for example by increasing the intensity of an LED lamp driver to maximum or charging a battery at maximum.

With the measurements t1 at 0% demand and t2 at 100% demand each application device may perform the calibration required to allow coherent behavior among all the application devices i.e. loads of the whole DC system.

The same method as described above, may be adapted and applied when the nominal voltage level is known in advance with each application device and no communication between DC source and application device is available.

CALIBRATION -without COMMUNICATION

In an electrical system without any communication means available between the source and the various loads, another method for calibration is required to have each application device calibrate its' voltage measurements. Instead of a communication, the DC source may apply a trigger pattern of voltage levels, such as e.g. a sequence of rising and falling voltage. Accordingly, the application device connected to the DC bus that is supplied by the DC source, may detect the pattern and initiate a calibration procedure. Such an approach may also be applied in electrical systems where the supply voltage may not be known in advance as e.g. with a solar panel or battery which may be partially depleted.

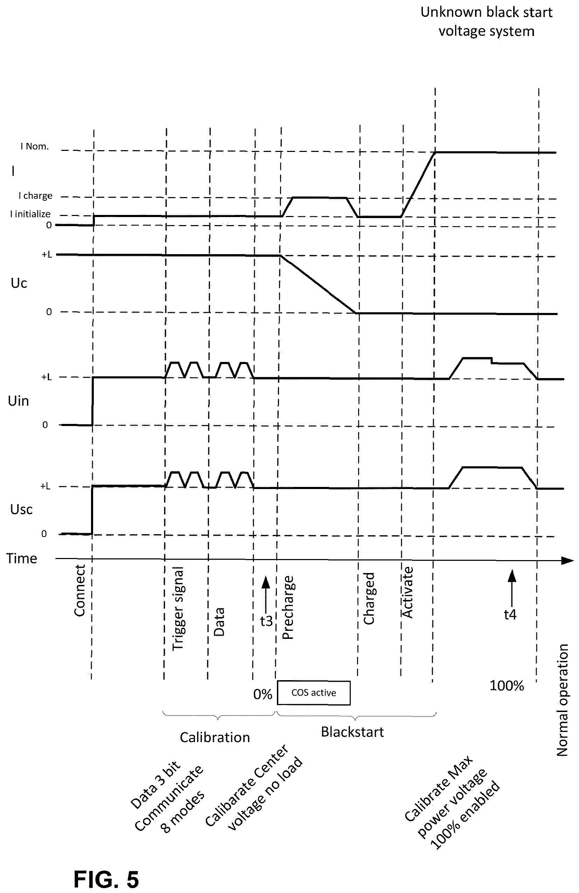

Referring to Fig. 5, a graph with the signals as in Fig. 4 is shown. Also in this situation without communication, each application device will perform a first measurement of local voltage, see t3 in Fig. 5, during the inrush phase of the blackstart procedure. The inrush phase during which a minimum current is provided, such as e.g. 3mA, may be considered as a 'no load' condition, as the electronics of various application devices will not yet be activated and hence power is not yet demanded. Following stabilization of the voltage on the supply line, pre-charging may commence. The inrush phase in this set up may take up more time than for the set up as described in reference to Fig.4.

During the inrush phase, the DC source may provide the trigger pattern that may be detected by the application device. In addition, the trigger pattern may include a data sequence to e.g. indicate the level of droop at which the source will operate. More in general, the droop describes the linear relationship between the voltage level and the amount of power provided. In response to the trigger pattern, each application device will perform a first measurement, see t3 in Fig. 5, to determine the voltage at no load i.e. 0% demand.

After a pre-determined delay, each application device will start demanding power. The pre-determined delay is to allow the pre-charge to start and to be completed so the supply line is at its' nominal operational value. The level of power that each application device will start to demand, will correspond the droop indicated by the data sequence of the trigger pattern. This may be maximum i.e. full load or another level or percentage of the droop.

This increased demand, which may be maximum or 'full load' condition, may influence the DC source and the voltage level available along the length of the supply line. Each application device will then perform a second measurement of the local voltage under this increased or full load condition, see t4 in Fig. 5, to determine what local voltage should be associated with the voltage level as provided by the DC source Use and the level of power demand as indicated by the data sequence of the trigger pattern.

With the measurements t3 at 0% demand and t4 at a indicated percentage e.g. 80%, 90% or 100% of droop each application device may perform the calibration required to allow coherent behavior among all the application devices i.e. loads of the whole DC system.

With the voltage measurements as set out above, each application device may calibrate its' voltage thresholds for determining whether voltage has fallen below a certain minimum voltage for operation and shut down or at least reduce power demand, or whether the voltage has risen above a threshold and start demanding full power.

SOCIALIZING DROOP

With the calibrations performed as described above, operation of the system as a whole may be improved further, by having the application devices adapt their droop settings, also referred to as droop curves, in accordance with the outcome of the calibration.

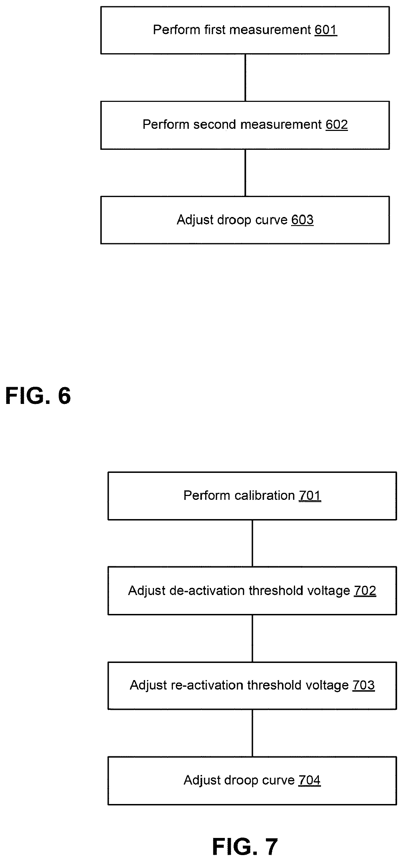

Referring to Fig. 6, a method for droop control in a DC system is shown. The DC systems includes a DC source, a DC bus and at least two DC application devices. Each application device having a droop curve and the DC source providing a DC voltage over the DC bus to each application device. Each application device will perform 601 a first voltage measurement during a first load condition. Each application device will perform 602 a second voltage measurement during a second load condition. And each application device will adjust 603 its' respective settings of the droop curve in accordance with the first and second voltage measurements.

Prior to adaptation, each application device may be configured to respond to a change in voltage on the supply line by adapting its' energy/power demand. For example, in case of a voltage drop some first low priority application devices may respond by lowering their energy /power demand. And with a further drop additional application devices may lower demand or even shut down. This configurable, step wise behavior, referred to as droop control, will ensure that higher priority and /or critical application devices may continue to function when energy supply as indicated by voltage drops falls. In the opposite case, when the voltage level on the supply line increases, application devices may increase their energy demand. Or if previously shut down, application devices may be activated again.

As indicated earlier above, in systems with extended supply lines the voltage level may fall gradually along the length of the supply line. Meaning, that even though the energy supply remains constant, some application devices further downstream along the supply line may measure a lower voltage level than devices upstream. In order to ensure that application devices operate coherently, the droop behavior may be socialized.

Referring to Fig. 7, a method is illustrated that each application device may perform in order to socialize droop. The method includes calibration 701, which as described above may be performed in various ways. Next, a threshold for de-activating may be adjusted 602. Under normal operation each application device may have a voltage threshold below which the device will not work properly or at least should be temporarily deactivated. With the calibrated maximum voltage under full load condition, this threshold for de-activating may be adjusted 702.

Next, a threshold for re-activating may be adjusted 703. Under normal operation each application device may have a voltage threshold above which, following earlier de-activation, the device will be able to work properly again and may be re-activated. With the calibrated maximum voltage under full load condition, this threshold for re-activating may be adjusted 703. The re-activation threshold may differ from the de-activation threshold in order to prevent an immediate de-activation upon (re-)activation of several application device sat once.

Should the application device be able to lower its' power demand gradually, whether e.g. linear or stepwise, a droop curve or power demand curve which prescribes how much power to demand at a certain voltage level may be adjusted 704.

The adjustment of the droop curve, or droop settings, will be based on the power corresponding with the calibrated voltage levels, see eq. 1. Herein the adjusted power $P_{cal}$ is calculated based on the first voltage measurements t1, t3 and second voltage measurements t2, t4, e.g. under no load i.e. 0% and e.g. maximum load 100%.

$$P_{cal} = \frac{(V_{meas} - V_{0\%})}{(V_{100\%} - V_{0\%})} * P_{100\%} \qquad \text{Eq. 1}$$

As an illustrative example, for a 100W droop between 380V and 350V, measured at 360V the calculation results in:

$$P_{cal} = \frac{(360 - 350)}{(380 - 350)} * 100 = 33.3W \qquad \text{Eq. 2}$$

So, in order to socialize the droop the V100% and V0% voltage thresholds are adjusted in accordance with the calibrated values and load operating point under normal droop. Hence, for the set up described in reference to Fig. 4, these are calculated as follows:

$$V_{0\%} = V_{t1} - (V_{100\%} - V_{t2}) \qquad \text{Eq. 3}$$

$$V_{100\%} = V_{t2} \qquad \text{Eq. 4}$$

And likewise, for the set up described in reference to Fig. 5, these are calculated as follows:

$$V_{0\%} = V_{t3} - (V_{100\%} - V_{t4}) \qquad \text{Eq. 5}$$

$$V_{100\%} = V_{t4} \qquad \text{Eq. 6}$$

In this manner, calibration of the application devices may be complemented by socializing the droop control.

In further embodiments, the droop curve may be composed of multiple segments. Instead of one linear relation between Voltage and Power from 0% -100%, it may have e.g. two segments, one from 0%-70% and another for 70%-100%, ro from 0%-50% and from 50%100%. Or any other combination of multiple segments and other split of these segments along the droop curve.

Although the present invention has been described above with reference to specific embodiments, it is not intended to be limited to the specific form set forth herein. Rather, the invention is limited only by the accompanying claims and, other embodiments than the specific above are equally possible within the scope of these appended claims.

Furthermore, although exemplary embodiments have been described above in some exemplary combination of components and/or functions, it should be appreciated that, alternative embodiments may be provided by different combinations of members and/or functions without departing from the scope of the present disclosure.

## Claims

1. Method for droop control in a DC system comprising a DC source, a DC bus and at least two DC application devices, each application device having a droop curve, the DC source providing a DC voltage over the DC bus to each application device;

   each application device performing a first voltage measurement during a first load condition;
   each application device performing a second voltage measurement during a second load condition;
   each application device adjusts its' respective settings of the droop curve in accordance with the first and second voltage measurements.

2. Method according to claim 1, wherein, when a droop level associated with the second load condition is known in advance by each application device, the first load condition is a no load condition during blackstart; and
   each application device starts operating under the second load condition when a voltage of the associated droop level is detected on the DC bus.

3. Method according to claim 1, detecting, by each application device, a trigger pattern, the trigger pattern indicating droop level of the first load condition and of the second load condition;
   wherein each application device:

   starts operating according to the droop level of the first load condition in response to detecting the trigger pattern; and
   starts operating according to the droop level of the second load condition in response to detecting a voltage on the DC bus associated with the droop level of the second load condition.

4. Method according to any of claims 1-3, wherein in response to adjusting the droop curve, each application device adjusts a de-activation threshold voltage and re-activation threshold.

5. A DC system comprising a DC source, a DC bus and at least two DC application devices, the DC source providing a DC voltage over the DC bus to each application device;

wherein each application device comprises a droop curve which determines the power demand in relation to voltage provided;

wherein each application device is configured to:

perform a first voltage measurement of the DC voltage under a first load condition; and
perform a second voltage measurement of the DC voltage under a second load condition;
adjust settings of the droop curve in accordance with the first and second voltage measurements.

6. A DC operated application device configured for:

performing a first voltage measurement during a first load condition;
performing a second voltage measurement during a second load condition;
adjusting respective settings of a droop curve in accordance with the first and second voltage measurements.

**FIG. 1**

**FIG. 2**

**FIG.3**

Known Blackstart voltage

**FIG. 4**

Unknown black start
voltage system

I Nom.

I

I charge

I initialize

0

+L

Uc

0

+L

Uin

0

+L

Usc

0

Time

Connect

Trigger signal

Data

t3

Precharge

Charged

Activate

t4

0%

COS active

100%

Normal operation

Calibration

Blackstart

Data 3 bit
Communicate
8 modes

Calibarate Center
voltage no load

Calibrate Max
power voltage
100% enabled

**FIG. 5**

Perform first measurement 601

Perform second measurement 602

Adjust droop curve 603

# FIG. 6

Perform calibration 701

Adjust de-activation threshold voltage 702

Adjust re-activation threshold voltage 703

Adjust droop curve 704

# FIG. 7

Europäisches
Patentamt

European
Patent Office

Office européen
des brevets

**EUROPEAN SEARCH REPORT**

Application Number

EP 23 16 8672

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/004611 A1 (FURUKAWA ELECTRIC CO LTD [JP]) 6 January 2022 (2022-01-06) * pages 1-27; figures 1-12 * | 1-6 | INV. H02J1/10 H02J13/00 |
| A | WO 2019/103059 A1 (RIKEN [JP]) 31 May 2019 (2019-05-31) * pages 1-16; figures 1-16 * | 1-6 | |
| A | US 10 770 988 B2 (VIRGINIA TECH INTELLECTUAL PROPERTIES INC [US]) 8 September 2020 (2020-09-08) * columns 1-8; figures 1-12 * | 1-6 | |
| A | US 2020/059100 A1 (KAWAMOTO DAISUKE [JP]) 20 February 2020 (2020-02-20) * abstract; figures 1-20 * | 1-6 | |
| A | US 2014/340941 A1 (JUTRAS MARK [US] ET AL) 20 November 2014 (2014-11-20) * pages 3,5; figures 1-6 * | 1-6 | |
| | | | TECHNICAL FIELDS SEARCHED (IPC) |
| A | CN 113 054 648 A (UNIV DONGGUAN TECHNOLOGY) 29 June 2021 (2021-06-29) * abstract; figures 1-3 * | 1-6 | H02J |
| A | CN 112 436 501 A (UNIV ANHUI TECHNOLOGY) 2 March 2021 (2021-03-02) * abstract; figures 1-5 * | 1-6 | |

The present search report has been drawn up for all claims

| Place of search | Date of completion of the search | Examiner |
|---|---|---|
| Munich | 18 September 2023 | Krasser, Bernhard |

EPO FORM 1503 03.82 (P04C01)

## ANNEX TO THE EUROPEAN SEARCH REPORT
## ON EUROPEAN PATENT APPLICATION NO.

EP 23 16 8672

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2023

| Patent document cited in search report | | Publication date | Patent family member(s) | | Publication date |
|---|---|---|---|---|---|
| WO 2022004611 | A1 | 06-01-2022 | CN | 115917903 A | 04-04-2023 |
| | | | EP | 4175106 A1 | 03-05-2023 |
| | | | JP | WO2022004611 A1 | 06-01-2022 |
| | | | US | 2023114812 A1 | 13-04-2023 |
| | | | WO | 2022004611 A1 | 06-01-2022 |
| WO 2019103059 | A1 | 31-05-2019 | AU | 2018373453 A1 | 11-06-2020 |
| | | | CN | 111448733 A | 24-07-2020 |
| | | | EP | 3716435 A1 | 30-09-2020 |
| | | | JP | 6923231 B2 | 18-08-2021 |
| | | | JP | WO2019103059 A1 | 19-11-2020 |
| | | | KR | 20200090163 A | 28-07-2020 |
| | | | US | 2020280183 A1 | 03-09-2020 |
| | | | WO | 2019103059 A1 | 31-05-2019 |
| US 10770988 | B2 | 08-09-2020 | NONE | | |
| US 2020059100 | A1 | 20-02-2020 | EP | 3605769 A1 | 05-02-2020 |
| | | | JP | 7147743 B2 | 05-10-2022 |
| | | | JP | WO2018173546 A1 | 23-01-2020 |
| | | | US | 2020059100 A1 | 20-02-2020 |
| | | | WO | 2018173546 A1 | 27-09-2018 |
| US 2014340941 | A1 | 20-11-2014 | CN | 104167920 A | 26-11-2014 |
| | | | EP | 2804304 A1 | 19-11-2014 |
| | | | US | 2014340941 A1 | 20-11-2014 |
| CN 113054648 | A | 29-06-2021 | NONE | | |
| CN 112436501 | A | 02-03-2021 | NONE | | |

EPO FORM P0459

For more details about this annex : see Official Journal of the European Patent Office, No. 12/82